**Europäisches Patentamt**

**European Patent Office**

**Office européen des brevets**

(19)

(11) Veröffentlichungsnummer : **0 312 709 B1**

# (12) EUROPÄISCHE PATENTSCHRIFT

(45) Veröffentlichungstag der Patentschrift :
04.09.91 Patentblatt 91/36

(51) Int. Cl.$^5$ : **B60K 11/08, B62D 37/02**

(21) Anmeldenummer : 88111511.7

(22) Anmeldetag : 18.07.88

(54) Kraftfahrzeug, insbesondere Personenwagen.

(30) Priorität : 17.10.87 DE 3735185

(43) Veröffentlichungstag der Anmeldung :
26.04.89 Patentblatt 89/17

(45) Bekanntmachung des Hinweises auf die
Patenterteilung :
04.09.91 Patentblatt 91/36

(84) Benannte Vertragsstaaten :
**DE ES FR GB IT**

(56) Entgegenhaltungen :
**EP-A- 0 226 778**
**DE-A- 3 615 584**
**FR-A- 2 541 200**

(73) Patentinhaber : **Dr.Ing.h.c. F. Porsche
Aktiengesellschaft
Porschestrasse 42
W-7000 Stuttgart 40 (DE)**

(72) Erfinder : **Wagner, Dieter, Dipl.-Ing. FH
Grossmoltenstrasse 28
W-7141 Oberriexingen (DE)**
Erfinder : **Durm, Jürgen, Dipl.-Ing. FH
Wolf-Hirth-Strasse 4
W-7257 Ditzingen (DE)**

EP 0 312 709 B1

## Beschreibung

Die Erfindung bezieht sich auf ein Kraftfahrzeug gemäß dem Oberbegriff des Anspruchs 1. Ein derartiges Kraftfahrzeug ist aus der DE-A 3615584 (veröffentlicht am 12.11.1987) bekannt.

Gemäß der DE-A 3615584 werden ein in Fahrtrichtung gesehen hintenliegender, querverlaufender Spaltbereich und seitlich außenliegende, längsverlaufende Spaltbereiche zwischen der Luftleitvorrichtung und dem Aufbau in ausgefahrener Betriebsstellung der Luftleitvorrichtung durch Abdeckelemente verschlossen. Das Abdeckelement für den hinteren Spaltbereich besteht bei dieser Anordnung aus zwei gelenkig miteinander verbundenen starren Teilen, wobei ein Teil an der Luftleitvorrichtung und das andere Teile an einer Verstelleinrichtung für die Luftleitvorrichtung befestigt ist.

Zur Erzielung eines guten Abtriebes an der Hinterachse ist es erforderlich, die Abrißkante der Luftleitvorrichtung möglichst hochliegend und relativ weit hinten anzuordnen. Daraus folgt, daß ein großflächiges Abdeckelement für den hinteren Spaltbereich zwischen Luftleitvorrichtung und Aufbau benötigt wird. Die starren, zusammenklappbaren Teile des Abdeckelementes würden bei eingefahrener Luftleitvorrichtung gemäß dem Hauptpatent in Fahrzeuglängsrichtung gesehen, einen relativ großen Bauraum beanspruchen und unter Umständen einen Teilbereich der Eintrittsöffnung für die vom Gebläse angesaugte Kühlluft überlappen, was sich ungünstig auf die Kühlung der Brennkraftmaschine auswirken würde.

Aufgabe der Erfindung ist es, an einer im Heckbereich angeordneten Luftleitvorrichtung solche Vorkehrungen zu treffen, daß bei gutem Abtrieb an der Hinterachse eine funktionsgerechte Beaufschlagung der Brennkraftmaschine mit Kühlluft sichergestellt ist. Ferner soll das Ansaugen von Abgasen oder Schmutz durch das Gebläse zuverlässig unterbunden werden.

Diese Aufgabe wird erfindungsgemäß durch die kennzeichnenden Merkmale des Anspruchs 1 gelöst. Weitere vorteilhafte Ausbildung der Erfindung beinhalten die Unteransprüche.

Die mit der Erfindung hauptsächlich erzielten Vorteile sind darin zu sehen, daß durch die Anordnung von faltenartigen Abschnitten bei ausgefahrener Betriebsstellung ein großflächiges Abdeckelement geschaffen wird, wogegen in der eingefahrenen Ruhestellung der Luftleitvorrichtung die faltenartigen Abschnitte ziehharmonikaförmig übereinanderliegen und so in Fahrzeuglängsrichtung gesehen, relativ wenig Bauraum beanspruchen, so daß sie nicht in die Eintrittsöffnung für die angesaugte Kühlluft hineinragen. Durch die Filmgelenkscharniere wird eine einfache Verbindung zwischen den faltenartigen Abschnitten und den angrenzenden Bereichen des Abdeckelementes geschaffen. Das die faltenartigen Abschnitte aufweisende Teil wird aus zwei unterschiedlichen Werkstoffen in einem Extrusionsvorgang hergestellt, so daß die Herstellungskosten niedrig gehalten werden. Die Filmgelenkscharniere bestehen dabei aus einem weichen Kunststoff, z. B. thermoplastischem Polyurethan, wogegen die restlichen Bereiche des Abdeckelementes aus einem relativ harten Kunststoff wie Polycarbonat, ABS oder dergleichen gefertigt sind.

Ein Ausführungsbeispiel der Erfindung ist in der Zeichnung dargestellt und wird im folgenden näher erläutert.

Es zeigt

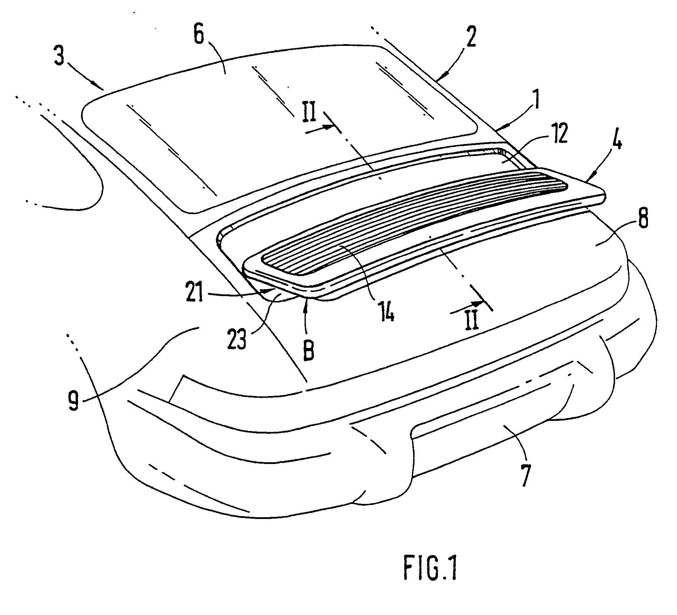

Fig. 1    eine Schrägansicht von hinten auf den Heckbereich eines Personenwagens mit einer Luftleitvorrichtung,

Fig. 2    einen Schnitt nach der Linie II-II der Fig. 1 in größerem Maßstab, wobei die Luftleitvorrichtung ihre eingefahrene Ruhestellung einnimmt,

Fig. 3    einen Schnitt entsprechend Fig. 2, wobei die ausgefahrene Betriebsstellung der Luftleitvorrichtung dargestellt ist,

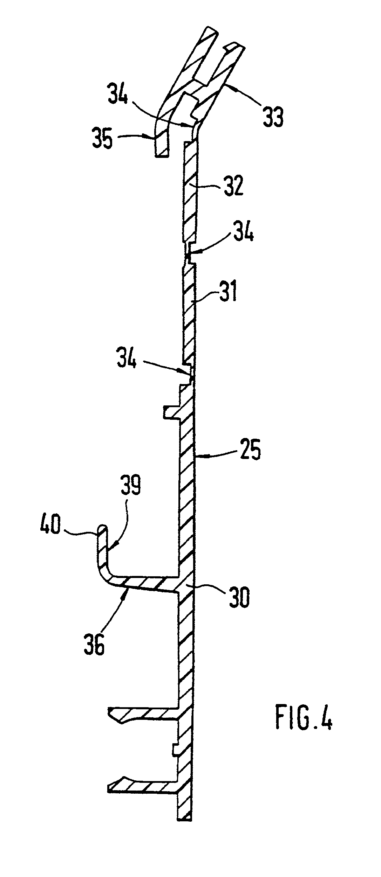

Fig. 4    einen Schnitt durch das untere Teil des hinteren Abdeckelementes in gestreckter Stellung.

Der Personenwagen 1 umfaßt einen Aufbau 2 mit einer im Heckbereich 3 angeordneten Luftleitvorrichtung 4, die mittels einer Verstelleinrichtung 5 von einer bündig mit dem angrenzenden Aufbau 2 verlaufenden Ruhestellung A in eine ausgefahrene Betriebsstellung B bewegbar ist und umgekehrt. Durch die Luftleitvorrichtung 4 wird einerseits der Luftwiderstandsbeiwert des Personenwagens 1 herabgesetzt und andererseits im Fahrbetrieb der dynamische Hinterraddruck vergrößert (Abtrieb).

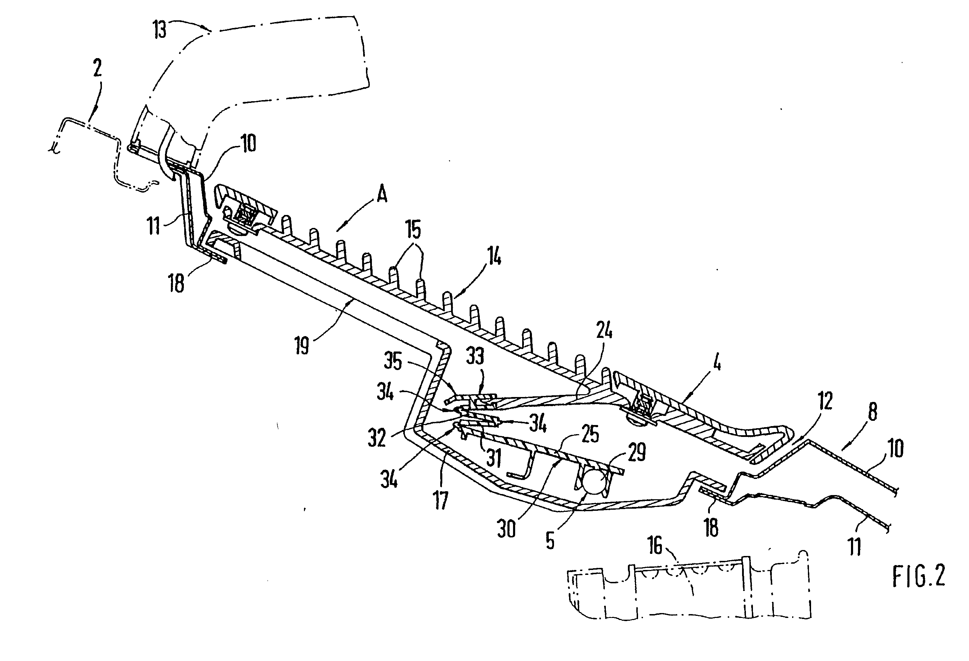

Im Heckbereich 3 setzt sich der Aufbau 2 aus einer Heckscheibe 6, einem Stoßfänger 7 und einer Heckhaube 8 zusammen, die zwischen Seitenteilen 9 angeordnet ist. Die aus einem Außenteil 10 und einem inneren Versteifungsrahmen 11 gebildete Heckhaube 8 weist eine etwa rechteckförmige Öffnung 12 auf, in die die Luftleitvorrichtung 4 eingesetzt ist (Fig. 2). In der Ruhestellung A verläuft die klappen- bzw. spoilerartig ausgebildete Luftleitvorrichtung 4 außenhautbündig mit der Kontur des fließheckartig ausgestalteten Heckbereichs 3, wogegen sie in der Betriebsstellung B aus der Karosserieebene herausgeschwenkt ist, dergestalt, daß ihre außenliegende Anströmfläche etwa horizontal angestellt ist. Gleichzeitig wird die Luftleitvorrichtung 4 entgegen

2

EP 0 312 709 B1

der Fahrtrichtung C um ein Maß D nach hinten verschoben. Am oberen Rand der Heckhaube 8 ist eine hochgesetzte Zusatzbremsleuchte 13 vorgesehen (Fig. 2).

In eine obere Begrenzungsfläche der Luftleitvorrichtung 4 ist ein Lufteinlaßgitter 14 eingesetzt, das mehrere Querstreben 15 umfaßt. Unter der Heckhaube 8 bzw. der Luftleitvorrichtung 4 ist ein Gebläse 16 angeordnet, durch welches aus dem Unterdruckgebiet des Heckbereiches 3 Kühlluft zu einem nicht näher dargestellten, luftgekühlten Heckmotor angesaugt wird.

Unterhalb der Luftleitvorrichtung 4 ist in die Öffnung 12 der Heckhaube 8 ein etwa wannenförmig ausgebildetes Verkleidungsteil 17 eingesetzt, welches sich an Flanschen 18 der Heckhaube 8 abstützt. In einem vorderen Bereich weist das Verkleidungsteil 16 eine Ausnehmung 19 für die vom Gebläse 16 angesaugte Kühlluft auf.

In der ausgefahrenen Betriebsstellung B der Luftleitvorrichtung 4 verläuft diese mit Abstand zum darunterliegenden Aufbau 2, wodurch zwischen Luftleitvorrichtung 4 und dem Aufbau 2 ein Spalt gebildet wird. Um zu vermeiden, daß Auspuffgase und/oder Schmutzpartikel durch den im Heckbereich 3 herrschenden Unterdruck durch das Gebläse 16 angesaugt werden, sind ein in Fahrtrichtung gesehen, hintenliegender Spaltbereich 20 und die beiden seitlich außenliegenden, längsverlaufenden Spaltbereiche 21 zwischen der Luftleitvorrichtung 4 und dem Aufbau 2 in ausgefahrener Betriebsstellung B der Luftleitvorrichtung 4 durch Abdeckelemente 22, 23 verschlossen. Das Abdeckelement 22 für den hinteren Spaltbereich 20 besteht aus zwei Teilen 24, 25, die über eine Clipsverbindung 26 zusammenwirken. Das relativ kurze, starr ausgebildete Teil 24 ist einstückig mit der darüberliegenden Luftleitvorrichtung 4 ausgebildet und verläuft in Fahrtrichtung C gesehen, schräg nach unten.

Die Clipsverbindung 26 setzt sich aus einem mit einer Hinterschneidung versehenen Steg 27 und einer etwa U-förmig profilierten Aufnahme 28 zusammen, wobei der Steg 27 abschnittsweise in die Aufnahme 28 eingreift. Der Steg 27 ist am unteren Ende des Teiles 24 angeformt. Das andere Teil 25 des Abdeckelementes 22 ist von hinten auf ein Querrohr 29 der Verstelleinrichtung 5 aufgeclipst und setzt sich aus einem ersten plattenförmigen Bereich 30, zwei oder mehreren daran anschließenden, faltenartigen Abschnitten 31, 32 und einem etwa H-förmig profilierten, oberen Endbereich 33 zusammen. Die Aufnahme 28 der Clipsverbindung 26 ist in den H-förmigen Endbereich 33 integriert und bildet einen oberen Teilabschnitt von diesem.

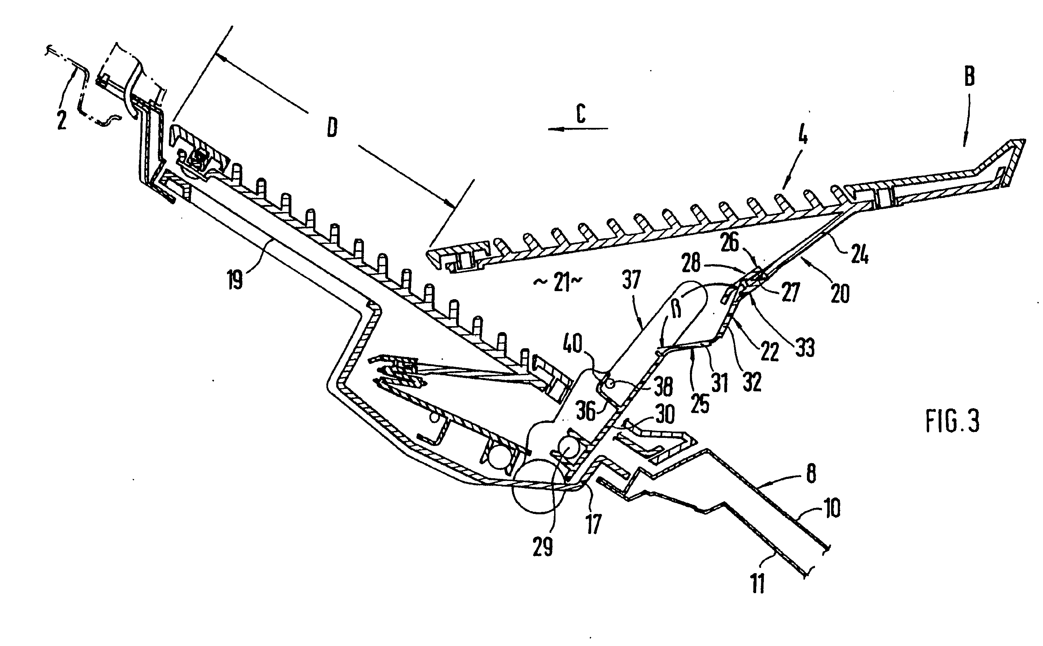

In der eingefahrenen Ruhestellung A liegen die faltenartigen Abschnitte 31, 32 des Teiles 25 ziehharmonikaartig zusammengefaltet übereinander, so daß das Teil 25 in Fahrzeuglängsrichtung gesehen, wenig Bauraum beansprucht und nicht in die Ausnehmung 19 des Kühllufteintritts hineinragt. In der ausgefahrenen Betriebsstellung B nehmen die faltenartigen Abschnitte 31, 32 eine annähernd gestreckte Lage zueinander ein, wobei die Abschnitte 31, 32 unter einem stumpfen Winkel β zueinander verlaufen (Fig. 3). Die faltenartigen Abschnitte 31, 32 sind untereinander und mit den angrenzenden starren Bereichen 30, 33 des Teiles 25 jeweils über Filmgelenkscharniere 34 verbunden, die sich über die gesamte Breite des Abdeckelementes 22 erstrecken. Die relativ dünn ausgebildeten Filmgelenkscharniere 34 sind aus einem weichen Kunststoff, z. B. aus thermoplastischem Polyurethan hergestellt, wogegen die übrigen Bereiche 30 bis 33 des Teiles 25 aus einem relativ harten Kunststoff wie Polycarbonat, ABS oder dergleichen bestehen.

Damit die dünnwandigen Filmgelenkscharniere 34 nicht ständig einer UV-Bestrahlung durch das Lufteintrittsgitter 14 hindurch ausgesetzt sind, ist am H-förmigen Endbereich 33 des Teiles 25 ein verlängerter, nach unten hin abgewinkelter Arm 35 angeformt, der die darunterliegenden Filmgelenkscharniere 34 in der zusammengefalteten Stellung abdeckt. Ferner ist am starren Bereich 30 des Teiles 25 eine etwa L-förmige Versteifungsrippe 36 angebracht. die mit einem an einem Lenker 37 der Verstelleinrichtung 5 angeordneten Stift 38 dergestalt zusammenwirkt, daß das Teil 25 in der ausgefahrenen Betriebsstellung nach hinten hin (entgegen der Fahrtrichtung) fixiert ist. In dieser Stellung liegt der Stift 38 an der Innenseite 39 eines aufrechten Steges 40 der Versteifungsrippe 36 an.

Die Verstelleinrichtung 5, die seitlichen Abdeckelemente 33 und die Antriebseinrichtung sind hinsichtlich ihres Aufbaus und ihrer Funktion in der Patentanmeldung P 3615584.5 ausführlich beschrieben.

Das Teil 25 des Abdeckelementes 22 wird in einem Extrusionswerkzeug hergestellt, wobei die beiden unterschiedlichen Werkstoffe für die starren Bereiche 30 bis 33 und die Filmgelenkscharniere 34 gleichzeitig eingebracht und das Teil 25 in einem Arbeitsgang hergestellt wird.

**Patentansprüche**

1. Kraftfahrzeug, insbesondere Personenwagen, mit einem Heckmotor und einer im Heckbereich (3) angeordneten Luftleitvorrichtung (4), die von einer bündig mit dem angrenzenden Aufbau (2) verlaufenden Ruhestellung (A) in eine ausgefahrene Betriebsstellung (B) bewegbar ist, wobei die Luftleitvorrichtung (4) in der Betriebsstellung (B) mit Abstand zum Aufbau (2) verläuft und ein in Fahrtrichtung gesehen hintenliegender,

3

querverlaufender Spaltbereich (20) und seitlich außenliegende, längsverlaufende Spaltbereiche (21) zwischen der Luftleitvorrichtung (4) und dem Aufbau (2) durch Abdeckelemente (22, 23) verschlossen sind und daß ferner mittels eines Gebläses (16) Kühlluft angesaugt wird und durch Lufteintrittsöffnungen der Luftleitvorrichtung (4) zu einem Heckmotor strömt, dadurch gekennzeichnet, daß das Abdeckelement (22) für den hinteren Spaltbereich (20) zumindest örtlich faltenartige Abschnitte (31, 32) aufweist, die in Ruhestellung (A) der Luftleitvorrichtung (4) zusammengefaltet übereinanderliegen, wogegen in der Betriebsstellung (B) die faltenartigen Abschnitte (31, 32) eine annähernd gestreckte Lage zueinander einnehmen.

2. Kraftfahrzeug nach Anspruch 1, dadurch gekennzeichnet, daß die faltenartigen Abschnitte (31, 32) an dem an der Verstelleinrichtung (5) befestigten Teil (25) des Abdeckelementes (22) vorgesehen sind und daß das Teil (25) über eine Clipsverbindung (26) mit dem an der Luftleitvorrichtung (4) befestigten starren Teil (24) verbunden ist.

3. Kraftfahrzeug nach Anspruch 1, dadurch gekennzeichnet, daß die faltenartigen Abschnitte (31, 32) ziehharmonikaförmig übereinanderliegend ausgebildet sind und sich über die gesamte Breite des Abdeckelementes (22) erstrecken.

4. Kraftfahrzeug nach den Ansprüchen 1 und 2, dadurch gekennzeichnet, daß die faltenartigen Abschnitte (31, 32) zwischen einem etwa H-förmig ausgebildeten, oberen Endbereich (33) und einem plattenförmig ausgebildeten unteren Bereich (30) des Teiles (25) angeordnet sind.

5. Kraftfahrzeug nach Anspruch 2, dadurch gekennzeichnet, daß die Clipsverbindung (26) eine U-förmige Aufnahme (28) umfaßt, in die ein zungenförmiger Steg (27) des Teiles (24) formschlüssig einrastet.

6. Kraftfahrzeug nach Anspruch 5, dadurch gekennzeichnet, daß die U-förmige Aufnahme (28) in den H-förmigen Endbereich (33) des Teiles (25) integriert ist.

7. Kraftfahrzeug nach den Ansprüchen 1 und 4, dadurch gekennzeichnet, daß die faltenartigen Abschnitte (31, 32) untereinander und mit den angrenzenden Bereichen (30, 33) jeweils über dünnwandige Filmgelenkscharniere (34) verbunden sind.

8. Kraftfahrzeug nach Anspruch 7, dadurch gekennzeichnet, daß das Teil (25) im Bereich der Filmgelenkscharniere (34) aus thermoplastischem Polyurethan besteht, wogegen die verbleibenden Bereiche (30 bis 33) aus einem geeigneten harten Kunststoff wie Polycarbonat, ABS oder dergleichen gefertigt sind.

9. Kraftfahrzeug nach Anspruch 1, dadurch gekennzeichnet, daß in eingefahrener Ruhestellung (A) der Luftleitvorrichtung (4) am H-förmigen Endbereich (33) des Teiles (25) ein verlängerter, abgewinkelter Arm (35) vorgesehen ist, der die Filmgelenkscharniere (34) in der zusammengeklappten Stellung vor direkter UV-Bestrahlung schützt.

10. Kraftfahrzeug nach Anspruch 1, dadurch gekennzeichnet, daß am Teil (25) eine L-förmige Versteifungsrippe vorgesehen ist, die mit einem an einem Lenker (37) der Verstelleinrichtung (5) angebrachten Stift (38) dergestalt zusammenwirkt, daß das Teil (25) bei ausgefahrener Betriebsstellung der Luftleitvorrichtung (4) entgegen der Fahrtrichtung fixiert ist.

## Claims

1. Motor vehicle, in particular motor car, having a rear engine and having arranged in the rear area (3) an air-guiding device (4) which may be moved from a rest position (A) running flush with the adjacent car body (2) into an extended operative position (B), the air-guiding device (4) in the operative position (B) running with clearance from the car body (2) and a transversal gap area (20) at the back, when seen in the direction of travel, and laterally external longitudinal gap areas (21), between the air-guiding device (4) and the car body (2), being sealed by cover elements (22, 23), and in that in addition cool air is taken in by means of a ventilator (16) and flows through air inlet openings of the air-guiding device (4) to a rear engine, characterised in that the cover element (22) for the rear gap area (20) has sections (31, 32) which are fold-like at least at certain points and which lie folded together on top of one another in the rest position (A) of the air-guiding device (4), whereas the fold-like sections (31, 32) adopt an approximately extended position with respect to one another in the operative position (B).

2. Motor vehicle according to Claim 1, characterised in that the fold-like sections (31, 32) are provided on the part (25) of the cover element (22) which is fixed on the adjusting device (5), and in that the part (25) is connected via a clip connection (26) to the rigid part (24) fixed on the air-guiding device (4).

3. Motor vehicle according to Claim 1, characterised in that the fold-like sections (31, 32) are constructed to lie on top of one another in the form of a concertina and extend over the entire width of the cover element (22).

4. Motor vehicle according to Claims 1 and 2, characterised in that the fold-like sections (31, 32) are arranged between an upper end area (33) of approximately H-shaped construction and a lower area (30) of the part (25) of plate-like construction.

5. Motor vehicle according to Claim 2, characterised in that the clip connection (26) comprises a U-shaped receiving part (28) in which a tongue-shaped web (27) of the part (24) latches in form-fit manner.

6. Motor vehicle according to Claim 5, characterised in that the U-shaped receiving part (28) is integrated in the H-shaped end area (33) of the part (25).

7. Motor vehicle according to Claims 1 and 4, characterised in that the fold-like sections (31, 32) are connected to one another and to the adjacent areas (30, 33) in each case via thin-walled film joint hinges (34).

8. Motor vehicle according to Claim 7, characterised in that the part (25) comprises thermoplastic polyurethane in the region of the film joint hinges (34), whereas the remaining areas (30 to 33) are manufactured from a suitable hard synthetic material such as polycarbonate, ABS or the like.

9. Motor vehicle according to Claim 1, characterised in that in the retracted rest position (A) of the air-guiding device (4) there is provided, on the H-shaped end area (33) of the part (25), an elongated, angled-off arm (35) which protects the film joint hinges (34), in the folded together position, from direct UV rays.

10. Motor vehicle according to Claim 1, characterised in that there is provided on the part (25) an L-shaped reinforcement rib which cooperates with a pin (38) mounted on a linking arm (37) of the adjusting device (5) in such a manner that the part (25), when the air-guiding device (4) is in the extended operative position, is fixed in opposition to the direction of travel.


## Revendications

1. Véhicule automobile, notamment voiture de tourisme, comportant un moteur à l'arrière et un dispositif de guidage d'air (4) placé dans la région arrière (3), qui est déplaçable depuis une position de repos (A) jointive avec la carrosserie (2) adjacente, vers une position extraite de fonctionnement (B), le dispositif de guidage d'air en position de fonctionnement (B) se trouvant à une certaine distance de la carrosserie (2) et une région de fente (20) transversale, située à l'arrière dans le sens de la marche et des régions de fente (21) longitudinales, situées latéralement à l'extérieur, entre le dispositif de guidage d'air (4) et la carrosserie (2), étant fermées par des éléments de couverture (22, 23) et en ce qu'en outre, de l'air de refroidissement est aspiré par un ventilateur (16) et s'écoule à travers des orifices d'entrée d'air du dispositif de guidage d'air (4) vers un moteur arrière, caractérisé en ce que l'élément de couverture (22) pour la région de fente (20) arrière présente au moins des portions (31, 32) localement en forme de plis qui, en position de repos (A) du dispositif de guidage d'air (4), sont repliées les unes sur les autres tandis qu'en position de fonctionnement (B), les portions (31, 32) en forme de plis prennent une position à peu près étirée les unes par rapport aux autres.

2. Véhicule automobile selon la revendication 1, caractérisé en ce que les portions (31, 32) en forme de plis sont prévues sur la partie (25) de l'élément de couverture (22), fixée sur le dispositif de réglage (5) et en ce que la partie (25) est assemblée, par un assemblage clipsé (26), à la partie rigide (24) fixée sur le dispositif de guidage d'air (4).

3. Véhicule automobile selon la revendication 1, caractérisé en ce que les portions (31, 32) en forme de plis sont superposées en accordéon et s'étendent sur toute la largeur de l'élément de couverture (22).

4. Véhicule automobile selon les revendications 1 et 2, caractérisé en ce que les portions (31, 32) en forme de plis sont placées entre une région terminale (33) supérieure à peu près en H et une région inférieure (30) en forme de plaque de la partie (25).

5. Véhicule automobile selon la revendication 2, caractérisé en ce que l'assemblage clipsé (26) comporte un logement (28) en U dans lequel s'engage par concordance de forme une nervure (27) en forme de languette de la partie (24).

6. Véhicule automobile selon la revendication 5, caractérisé en ce que le logement (28) en U est intégré dans la région terminale (33) en H de la partie (25).

7. Véhicule automobile selon les revendications 1 et 4, caractérisé en ce que les portions (31, 32) en forme de plis sont assemblées entre elles et avec les régions (30, 33) adjacentes, par des charnières en film (34) à paroi mince.

8. Véhicule automobile selon la revendication 7, caractérisé en ce que la partie (25) est en polyuréthanne thermoplastique dans la région des charnières en film (34), tandis que les autres régions (30 à 33) sont réalisées dans une matière plastique rigide appropriée, telle que du polycarbonate, de l'ABS ou une matière similaire.

9. Véhicule automobile selon la revendication 1, caractérisé en ce qu'en position de repos (A) rentrée du dispositif de guidage d'air (4) il est prévu sur la région terminale (33) en H de la partie (25), un bras (35) coudé, prolongé qui protège les charnières en film (34) en position repliée, contre le rayonnement UV direct.

10. Véhicule automobile selon la revendication 1, caractérisé en ce qu'il est prévu sur la partie (25) un raidisseur en L qui coopère avec une goupille (38) placée sur un bras oscillant (37) du dispositif de réglage (5), de manière que la partie (25) en position extraite de fonctionnement du dispositif de guidage (4), soit fixée dans le sens contraire au sens de la marche.

FIG.1

FIG.2

EP 0 312 709 B1

FIG. 3

FIG.4